# EUROPEAN PATENT APPLICATION

(11) **EP 1 936 127 A2**
(43) Date of publication of application: **25.06.2008**
(21) Application number: 07252712.0
(22) Date of filing: 06.07.2007
(51) Int. Cl.: F01K 23/06

(54) **Gasification reactor and gas turbine cycle in IGCC system**

(30) Priority: 11.09.2006 KR 20060087447; 26.03.2007 US 691401
(71) Applicant: Kim, Hyun Yong, Seoul (KR)
(72) Inventor: Kim, Hyun Yong, Seoul (KR)
(74) Representative: Addison, Ann Bridget

(57) **Abstract**

The present invention features gasification reactor and gas turbine cycle in an IGCC. A gas turbine is coupled to a gasification reactor and drives the gasification reaction. The gasification reactor includes a reduction reaction chamber, a feed stock inlet for introducing the feed stock into the reduction reaction chamber, a gas inlet for introducing an exhaust gas generated by the turbine into the reduction reaction chamber, and a gas outlet for releasing syngas generated by a reduction reaction of the feed stock and the exhaust gas in the reduction reaction chamber. The temperature of the reduction reaction chamber is maintained above 1200°C and below a non-fluid point of the non-carbonaceous component, such as slag in coal, included in the feed stock.

## Description

### CROSS-REFERENCES TO RELATED APPLICATIONS

This application claims the benefit of Korean Application Serial No. 10-2006-0087447, filed on September 11, 2006, and U.S. Application Serial No. 11/691,401, filed March 26, 2007.

### FIELD OF THE INVENTION

The present invention features an integrated gasification combined cycle system, and more specifically, an integrated gasification combined cycle system, in which a turbine engine drives the gasification reaction.

### BACKGROUND OF THE INVENTION

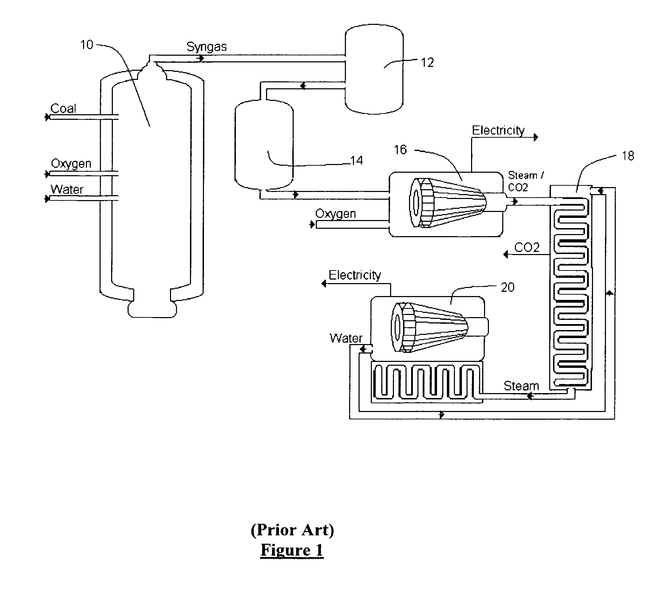

Conventional Integrated Gasification Combined Cycle ("IGCC") power plants are well known in the prior art. Portions of an example of a conventional IGCC power plant are shown in **FIG 1** for illustration purposes. In general, in IGCCs, coal is gasified in a conventional gasifier 10, and the resulting syngas, cooled and cleaned, drives a combustion turbine 16 to produce electricity. Specifically, as the syngas is combusted in the turbine 16, its products, steam and carbon dioxide gas reach a temperature of about 2000°C, and as the exhaust gas cools, heat energy is converted into work through the turbine 16 generating electricity. The exhaust gas of the combustion turbine 16 is also used to heat a boiler 18 to run a steam engine 20, which further generates electricity. The exhaust steam and the rest of waste heat of this system are collected in a hot water tank to be used for space heating, in order to make the most efficient use of coal energy from its gasification.

The conventional coal gasification technology, as is known today, has its origin from the 1934 Lurgi coal gasifier. In the gasifier, the following coal gas reactions, also known as steam and dry reforming reactions respectively, take place:

C+H₂O → CO+H₂

C+CO₂ → 2CO

Here, carbon (C) is reformed into syngas, which includes carbon monoxide (CO) and hydrogen gas (H₂). These reactions are chemically reductive and endothermic. Thus, for these the reforming reactions to proceed, heat energy comparable to the combustion reaction of carbon (i.e., C+O₂ → CO₂) needs to be absorbed.

This necessary heat is provided in the following manner. The gasifier combusts a portion of feed stock coal with air or oxygen gas, and the resulting heat of combustion is used to maintain the gasifier temperature high enough for the reforming reaction to take place. The powdered form of coal is combusted with air or oxygen (O₂) gas and the gasifier temperature is raised to approximately 1000°C, and then air or O₂ gas is shut off and ultra hot steam is injected into the gasifier. However, as some reforming reactions proceed, the gasifier temperature drops. Air or oxygen gas must be turned on again to raise the temperature back to the starting level. This process needs to be repeated to maintain the necessary temperature. Although this system has had some success of reforming coal into syngas with several minor modifications over the years, this is a rather cumbersome system, and there are several limitations inherent in a Lurgi gasifier.

First, the temperature reached in the gasifier is limited by the coal combustion reaction, that is, it is limited to 900°C, when coal is combusted with air, and to slightly less than 1200°C when O₂ gas is used. Applicant has observed that most of carbon reforming, however, does not occur until at temperature above 1200°C as discussed below.

Second, commercial coal contains substantial amount of slag, made of a various mixtures of SiO₂, Al₂O₃, Fe₂O₃, CuO, etc. These mixtures are in solid form at the room temperature, but become soft at approximately 1000°C and fluid at approximately 1300~1400°C. The fluid, non-fluid points, however, vary greatly based on the nature of coal and where it is mined. At the temperature above the coal fluid temperature, fluid coal slag collects inside the gasifier. The fluid slag quickly corrodes castables which make up the inner walls of the gasifier, which requires frequent scaling of castables, resulting in longer down-time for the gasifier. In addition, spotty corroded inner walls of castables add to the uneven temperature distribution within the gasifier.

The first limitation favors gasifier of large heat capacity, and the second limitation demands that the gasifier be large, so that large amount of slag can be accumulated between scalings to reduce the amount of scaling and down-time required. Accordingly, over the years, the size of conventional coal gasifiers have grown bigger and bigger. Now, ones that are commercially marketed by the oil majors stand as tall as three story buildings. Lately, some conventional coal gasifiers have been refitted with a high pressure spraying of heating oil with compressed O₂ gas in order to raise the operating temperature up to 1450°C. However, uniform temperature distribution and temperature control have been difficult to achieve in this system. Under such uneven temperature distribution, two competing reactions, combustion and reforming proceed concurrently in the same space. Therefore, any effort to maximize the reforming efficiency is a very laborious task.

For these reasons, in a conventional Lurgi gasification reactor used in IGCC, a partial combustion of coal within the gasifier reactor is not sufficient to bring the reactor temperature up to the level necessary for the reforming reaction to proceed. An additional fuel, such as heating oil, may be necessary to raise the operating temperature. However, as discussed above, it is difficult to control and maintain uniform temperature distribution within such reactor.

The present invention addresses these and other deficiencies.

### BRIEF SUMMARY OF THE INVENTION

In one aspect, the present invention features an integrated gasification combined cycle system, which includes a gasification reactor, and a gas turbine coupled to the gasification reactor. The gasification reactor includes a reduction reaction chamber, a feed stock inlet for introducing a feed stock into the reduction reaction chamber, a gas inlet for introducing an exhaust gas generated by the gas turbine into the reduction reaction chamber, and a gas outlet for releasing syngas generated by a reaction of the feed stock and the exhaust gas in the reduction reaction chamber. For example, an exhaust pipe of the gas turbine for releasing the exhaust gas may be coupled to a lower section of the reduction reaction chamber.

The exhaust gas generated by the gas turbine is steam where hydrogen gas and oxygen gas are provided to the gas turbine. The exhaust gas generated by the gas turbine is steam and carbon dioxide where syngas and oxygen gas are provided to the gas turbine. The exhaust gas provides heat energy sufficient to maintain a temperature of at least 1200°C in the reduction reaction chamber.

In one embodiment, the gasification reactor further includes an oxidation reaction chamber. In the oxidation reaction chamber, hydrogen gas and oxygen gas may react to generate steam. Alternatively, the oxidation reaction chamber may be a syngas burner, where syngas and oxygen gas react to generate steam and carbon dioxide. The steam or steam and carbon dioxide generated by the oxidation reaction chamber, such as syngas burner, provide heat energy sufficient to maintain a temperature of at least 1200°C in the reduction reaction chamber. In a preferred embodiment, the steam or steam and carbon dioxide from the gas turbine provide a primary source of heat energy for the reduction reaction chamber, and the steam or steam and carbon dioxide from the syngas burner provide a secondary source of heat energy for the reduction reaction chamber.

In one embodiment, the oxidation reaction chamber or syngas burner is positioned substantially orthogonally to the reduction reaction chamber to minimize the entrance of the unreacted oxygen into the reduction reaction chamber.

In one embodiment, the oxidation reaction chamber, such as syngas burner, is positioned sufficiently proximal to the feed stock inlet to quickly expose the feed stock material with the steam or steam and carbon dioxide to quickly achieve a temperature of at least 1200°C in the reduction reaction chamber.

In another aspect, the present invention features a method of gasification. According to the method, a gasification reactor and a gas turbine coupled to the gasification reactor are provided. A feed stock comprising a carbonaceous material is introduced into a reduction reaction chamber of the gasification reactor. In one embodiment, oxygen and hydrogen gas are introduced into the gas turbine and steam generated by the gas turbine enters the reduction reaction chamber to react with the carbonaceous material to produce syngas. In another embodiment, oxygen and syngas are introduced into the gas turbine, and steam and carbon dioxide generated by the gas turbine enter the reduction reaction chamber to react with the carbonaceous material to produce syngas. The steam or steam and carbon dioxide generated by the gas turbine may enter the reduction reaction chamber at a temperature between about 1500°C and about 1700°C. The steam or steam and carbon dioxide generated by the gas turbine provide heat energy sufficient to maintain a temperature of at least 1200°C in the reduction reaction chamber.

In one embodiment, the gasification reactor also includes an oxidation reaction chamber. Oxygen and hydrogen gas react in the oxidation reaction chamber to produce steam, which enters the reduction reaction chamber to provide heat energy sufficient to maintain a temperature of at least 1200°C in the reduction reaction chamber and react with the carbonaceous material to produce syngas. In another embodiment, the oxidation reaction chamber is a syngas burner where oxygen and syngas react to produce steam and carbon dioxide, which enter the reduction reaction chamber to provide heat energy sufficient to maintain a temperature of at least 1200°C in the reduction reaction chamber and react with the carbonaceous material to produce syngas.

In a preferred embodiment, oxygen is substantially fully consumed in the oxidation reaction chamber, such as a syngas burner and oxygen is substantially fully consumed in the gas turbine.

In another embodiment, the feed stock material introduced through the feed stock inlet is quickly exposed with the steam or steam and carbon dioxide generated by the oxidation reaction chamber, such as syngas burner, to enable the feed stock material to quickly achieve a temperature of at least 1200°C in the reduction reaction chamber.

In one embodiment, where the feed stock material also includes a non-carbonaceous component, the temperature of the reduction reaction chamber is maintained between about 1200°C and a non-fluid point of the non-carbonaceous component. For example, where the feed stock material is coal with the non-carbonaceous component being slag, the non-fluid point of the slag is between about 1300°C and 1400°C. Therefore, the temperature of the reduction reaction chamber should be maintained at between 1200°C and 1300°C.

In another embodiment, the feed stock material is coal powder which is sprayed into the reduction reaction chamber. For example, the coal powder can be spayed into the reduction reaction chamber using compressed carbon dioxide at a temperature of about 900°C.

In another embodiment, the slag in the coal is collected through a non-fluid slag collector provided near a lower section of the reduction reaction chamber.

In still another embodiment, at least a portion of the syngas produced by the reduction reaction chamber is recycled into the gas turbine and/or the oxidation reaction chamber, such as a syngas burner.

According to another aspect of the invention, there is provided a method of gasifying a carbonaceous material, said carbonaceous material comprising a carbonaceous component and a solid non-carbonaceous component, said method comprising the steps of: introducing said carbonaceous material into a reduction reaction chamber of a gasification reactor, wherein said reduction reaction chamber is maintained from about 1200°C to a temperature below the fluid point of said solid non-carbonaceous component; reacting oxygen gas and hydrogen gas or syngas in an oxidation reaction chamber of said gasification reactor thereby producing steam or steam and carbon dioxide; and allowing said steam or steam and carbon dioxide to enter said reduction reaction chamber and provide heat energy sufficient to maintain the temperature of said reduction reaction chamber of at least 1200°C and react with said carbonaceous component to produce syngas.

Preferably, said carbonaceous material is coal and said solid non-carbonaceous component is coal slag. Said solid non-carbonaceous component may have a fluid point above about 1300°C. Said slag may be collected as a non-fluid in a non-fluid slag collector.

According to another aspect of the invention, there is provided a gasification reactor comprising: a reduction reaction chamber having an upper section and a lower section; a feed stock inlet provided near the upper section for introducing a feed stock into the reduction reaction chamber; a first oxidation reaction chamber and a second oxidation chamber, each for converting hydrogen gas to steam or syngas to steam and carbon dioxide and providing steam or steam and carbon dioxide to the reduction reaction chamber; and a gas outlet for releasing syngas generated by a reaction of the feed stock and the steam or steam and carbon dioxide in the reduction reaction chamber.

Preferably, the first oxidation reaction chamber is positioned with respect to the reduction reaction chamber for steam or steam and carbon dioxide provided by the first oxidation reaction chamber to provide heat energy sufficient to maintain a temperature of at least 1200°C in the reduction reaction chamber, and wherein the second oxidation reaction chamber is positioned sufficiently proximal to the feed stock inlet to quickly expose the feed stock with steam or steam and carbon dioxide provided by the second oxidation reaction chamber to quickly achieve a temperature of at least 1200°C in the reduction reaction chamber.

Advantageously, the feed stock is coal and the reactor further comprises a non-fluid slag collector disposed near the lower section of said reduction reaction chamber. Said first oxidation reaction chamber may be a first syngas burner and said second oxidation reaction chamber may be a second syngas burner. Said first oxidation reaction chamber and said second oxidation reaction chamber are conveniently substantially orthogonal to said reduction reaction chamber.

According to another aspect of the invention, there is provided a gasification reactor comprising: a reduction reaction chamber; a feed stock inlet for introducing a feed stock into the reduction reaction chamber; an oxidation reaction chamber for converting hydrogen gas to steam or syngas to steam and carbon dioxide and providing steam or steam and carbon dioxide to the reduction reaction chamber; and a gas outlet for releasing syngas generated by a reaction of the feed stock and the steam or steam and carbon dioxide in the reduction reaction chamber, wherein the oxidation reaction chamber is positioned sufficiently proximal to the feed stock inlet to quickly expose the feed stock with steam or steam and carbon dioxide converted within the oxidation reaction chamber to quickly achieve a temperature of at least 1200°C in the reduction reaction chamber.

### BRIEF DESCRIPTION OF THE DRAWINGS

For a more complete understanding of the present invention, the objects and advantages thereof, reference is now made to the following descriptions taken in connection with the accompanying drawing in which:
**FIG. 1** illustrates portions of a conventional integrated gasification combined cycle.
**FIG. 2** is a graph of the syngas output rate versus gasification reactor temperature.
**FIG. 3** illustrates an improved integrated gasification combined cycle according to an embodiment of the invention.
**FIG. 4** illustrates a gasification reactor according to another embodiment of the invention.

### DETAILED DESCRIPTION OF THE INVENTION

The following description is meant to illustrate certain embodiments of the invention, and not to limit the scope of the invention.

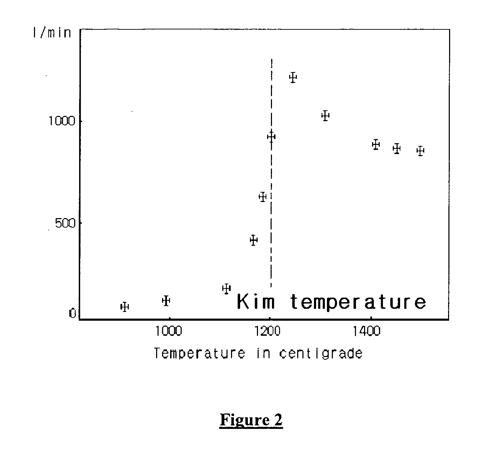

Applicant has observed that partial combustion of coal with air, which results in a temperature of 900°C, or with oxygen, which results in a temperature of slightly less than 1200°C, is insufficient for reformation of coal. As shown in **FIG. 2,** Applicant has measured syngas output versus reactor temperature and learned that carbon reforming occurs at temperatures above 1200°C and very little reforming occurs below 1200°C. A conventional Lurgi gasifier cannot reach the temperature of 1200°C even when O₂ gas is used to combust coal powder. Sporadic spot temperature may reach 1200°C, but the gasifier as a whole does not. The present invention features a gasification reactor and gas turbine cycle in an IGCC system, which operates at a temperature above 1200°C.

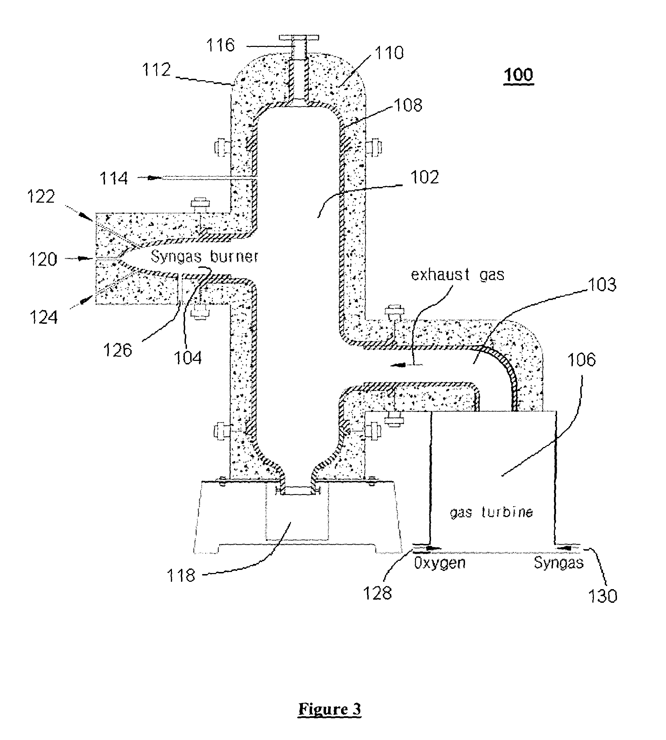

Referring to **FIG. 3**, the present invention features a gasification reactor 100 and a gas turbine 106 coupled to the gasification reactor 100 for use in an IGCC.

The gasification reactor 100 comprises a reduction reaction chamber 102, a feed stock inlet 114 for introducing a feed stock material into the reduction reaction chamber 102, a gas inlet 103 for introducing an exhaust gas generated by the gas turbine 106 into the reduction reaction chamber 102, and a gas outlet 116 for releasing syngas generated by a reaction of the feed stock material and the exhaust gas in the reduction reaction chamber 102.

In a specific embodiment of the invention, the gasification reactor 100 includes an inner lining 108 and an outer casing 112. The inner lining 108 can be constructed of any material that is substantially physically and chemically stable at temperatures above 1200° C. The inner lining 108, for example, can be ceramic. In a more specific embodiment, the inner lining 108 can be made of aluminum oxide. The outer casing 112 can be made of metal, or any other material with similar strength and heat resistance qualities. In a specific embodiment, the outer casing 112 is made of low carbon steel. The gasification reactor 100 can further include an insulating layer 110 disposed between the inner lining 108 and the outer casing 112. The insulating layer 110 can be made of castables. In a specific embodiment, the insulating layer 110 is made of a castable and rock wool composite. In another embodiment, the insulating layer 110 has a thickness sufficient to maintain the temperature of the outside wall of the reactor 100 at less than about 100°C. For example, the thickness of the insulating layer 110 can range from about 100 mm to about 150 mm. Notwithstanding the example provided above, one skilled in the art will recognize that the specific construction of the gasification reactor 100, including the material selection and specific dimensions, can vary.

The feed stock inlet 114 is positioned near the upper section of the reduction reaction chamber 102, such that the feed stock material introduced into the reduction reaction chamber 102 has sufficient time to reform as it falls within the chamber 102. In one embodiment, the feed stock inlet 114 is a sprayer capable of spraying the feed stock material into the reduction reaction chamber 102. For example, compressed, preheated CO₂ may be used to spray coal powder into the reduction reaction chamber 102. The gas outlet 116 is positioned near the upper end of the reduction reaction chamber 102, such that syngas produced within the reduction reaction chamber 102 is optimally released from the reduction reaction chamber 102.

In one embodiment, the reduction reaction chamber 102 further includes an oxidation reaction chamber or a syngas burner 104. The syngas burner 104 includes one or more inlets 122, 124 for oxygen, and an inlet 120 for hydrogen gas or syngas comprising hydrogen gas and carbon monoxide. As will be described in greater detail below, the syngas burner 104 generates steam or steam and CO₂ sufficient to carry heat energy necessary to maintain the temperature of the reduction reaction chamber 102 of at least 1200°C. In a preferred embodiment of the invention, an oxygen gas inlet 122, 124 is provided on each side of the syngas inlet 120. In another embodiment, the oxygen gas inlets 122, 124 are positioned at an angle relative to the syngas inlet 120 to introduce oxygen gas into the syngas burner 104 at an angle relative to the hydrogen or syngas introduced through the syngas inlet 120. This allows the oxygen gas and the hydrogen or syngas to converge and to react more effectively. A pilot light or ignition plug is introduced through the ignition hole 126 to ignite the oxygen and hydrogen or syngas within the syngas burner 104 to produce the ultra hot steam and carbon dioxide (CO₂) gas that fills the reduction reaction chamber 102.

In a preferred embodiment, the syngas burner 104 is positioned substantially orthogonally relative to the reduction reaction chamber 102 to prevent entry of unreacted oxygen into the reduction reaction chamber as further discussed below. In a preferred embodiment, the syngas burner 104 is also positioned sufficiently near the feed stock inlet 114, and in particular, just below the feed stock inlet 114. This position of syngas burner 104 in relation to the feed stock inlet 114 enables the exhaust gas of syngas burner 104 to immediately heat the sprayed feed stock material to the desirable 1200°C reaction temperature. At this temperature, newly sprayed feed stock material rapidly reacts with the exhaust gas in the reduction reaction chamber 102 to maintain a high reaction efficiency. The exact position of the syngas burner 104 in relation to feed stock inlet 114 will vary based on the specific type of feed stock material used in the gasification reactor 100 and the operating temperature of the syngas burner 104. Generally, it is preferred that the syngas burner 104 be positioned as close as practicable to the feed stock inlet 114 to allow optimal reduction of the carbonaceous material.

The reduction reaction chamber 103 further includes a non-fluid slag collector 118 disposed at the bottom of the reduction reaction chamber 102. The non-fluid slag collector 118 collects non-fluid form of non-carbonaceous component included in the feed stock that accumulates in the reduction reaction chamber 102 during the gasification process. As will be discussed in detail below, the present gasification reactor 100 operates at temperatures below the fluid point of the non-carbonaceous component to enhance the collection of the non-fluid form of such component.

The reduction reaction chamber 102 is coupled to a gas turbine 106 to introduce an exhaust gas comprising steam or steam and CO₂ into the reduction reaction chamber 102. The structure and components of a gas turbine, and in particular those used in an IGCC, are well known to those skilled in the art. The gas turbine 106 may be coupled to a lower section of the reduction reaction chamber 102 by, for example, coupling an exhaust gas outlet of the turbine 106 to a gas inlet of the reduction reaction chamber 100.

The IGCC of the present invention operates in the following manner.

Oxygen and hydrogen gas, or other mixtures of gas comprising hydrogen such as syngas, are provided to run the gas turbine 106, the operation of which is well known to those skilled in the art. When syngas is used, the syngas may be obtained by recycling at least a portion of the syngas output from the gasification reactor 100. Gas turbine 106 receives oxygen via oxygen inlet 128, and receives hydrogen or hydrogen gas mixture such as syngas via syngas inlet 130. The oxygen reacts with hydrogen to generate steam or the oxygen reacts with syngas to generate steam and carbon dioxide as follows:

H₂+1/2O₂ → H₂O

CO+1/2O₂ → CO₂

These are exothermic reactions which generate ultra hot gases comprising steam or steam and carbon dioxide at a temperature ranging from 1800°C and 2000°C. As the gas cools, heat energy is converted into work through the turbine producing electricity, but some of the exhaust gas is introduced into the reduction reaction chamber 102. The exhaust gas introduced into the reduction reaction chamber 102 may be at a temperature of about 1500°C to 1700°C. This exhaust gas introduced into the reduction reaction chamber 102 transports heat energy necessary to maintain the temperature of the reduction reaction chamber to be at 1200°C for the reduction reaction to take place. This is the primary source of heat energy for the reduction reaction chamber 102. This exhaust gas also gasifies the carbonaceous material in the feed stock. The temperature of the exhaust gas introduced into the reduction reaction chamber is proportional to the amount of work performed and electricity produced by the gas turbine 106, with more work and electricity generated resulting in lower temperature of the exhaust gas. In the present embodiment, it is important to balance the needs of generating maximum electricity with the need to maintain the temperature of the reduction reaction chamber at a sufficiently high temperature to enable the gasification reaction to take place. It is also important to prevent entry of any unreacted oxygen into the reduction reaction chamber 102, by controlling the ratio of the oxygen gas to hydrogen or syngas introduced into the gas turbine 106.

The syngas burner 104 also provides ultra hot steam or steam and carbon dioxide to provide heat energy sufficient to maintain a temperature of at least 1200°C in the reduction reaction chamber 102. This is typically secondary source of heat energy for the reduction reaction chamber 102.

Initially, the syngas burner 104 does not require any preheating. Hydrogen gas or syngas is introduced into the syngas burner 104 through the syngas inlet 120. The mix of hydrogen and carbon monoxide ratio in the syngas can vary from 1.0 to 0. This mix ratio is a critical factor for the process of liquefaction of syngas into methanol or dimethyl ether (DME). A small change in the ratio of hydrogen/carbon monoxide gas concentration in the syngas fed back into the syngas burner 104 and the gas turbine 106 are reflected in the reduction reaction, and the composition of syngas generated in the reduction reaction chamber 102. Initially, the hydrogen gas or syngas may be from a storage tank. Alternatively, the syngas may be obtained by recycling at least a portion of the syngas generated by the gasification reactor 100. In some embodiments of coal gasification, roughly 30% of the syngas produced by the gasification reactor 100 may be recycled through the syngas burner 104 to maintain the temperature and continue the operation of the gasification reactor 100. Oxygen is introduced into the syngas burner 104 through one or more oxygen gas inlets 122, 124. The syngas is ignited by introducing a pilot light through ignition hole 126. The temperature of the gasification reactor 100 rises suddenly with the ignition of syngas. The temperature of the gasification reactor 100 is controlled by adjusting the oxygen intake while monitoring the oxygen detector at the syngas outlet 116 to make it sure that no excess oxygen is detected at this stage. The temperature of the steam and CO₂ can range from 1800°C to 2000°C. The reduction reaction chamber 102 is brought up to a temperature of about 1000°C within 10 to 15 minutes. In this manner, when the temperature of the gasification reactor 100 reaches 1200°C, the gasification reactor 100 becomes filled with CO₂ and steam, produced from the reaction of syngas with oxygen. At the end of the heating, the oxygen gas is turned off first and then the syngas is turned off, causing the temperature to fall.

Because the syngas burner 104 is substantially orthogonal to the reduction reaction chamber 202 and is highly efficient, and because the amount of O₂ introduced into the syngas burner 104 is controllable, all of the O₂ introduced into the syngas burner 104 may be consumed entirely within the syngas burner 104. Therefore, in some embodiments, substantially no O₂ enters the reduction reaction chamber 102.

According to some embodiments of the invention, controlling the temperature of the gasification reactor 100 by varying the amount of O₂ gas introduced into the syngas burner 204 and gas turbine 106 has several additional advantages over conventional gasification reactors, where O₂ gas is introduced directly into a reduction reaction chamber. First, because combustion is an oxidation reaction, introducing and consuming O₂ in a reduction reaction chamber competes directly with the reduction reactions of carbon gasification/reforming. As such, carbon gasification/reforming is neutralized. This problem is avoided by igniting the O₂ in the syngas burner 104 and gas turbine 106, rather than in a reduction reaction chamber. Furthermore, major oxygenated pollutants are produced when O₂ is reacted in a standard reduction reaction chamber 102. These pollutants are eliminated by entirely reacting O₂ in the syngas burner 104 and gas turbine 106. Finally, the sporadic bursts of carbonaceous combustion and resulting uneven reactor temperatures found in conventional gasification reactors are eliminated when O₂ is introduced and entirely consumed in the syngas burner 104 and gas turbine 106, rather than in a reduction reaction chamber.

While the temperature of the reduction reaction chamber 102 is maintained at above 1200°C, a feed stock material comprising a carbonaceous material is introduced into the reduction reaction chamber 102 through the feed stock inlet 114. A carbonaceous material, as used herein, means material containing carbon elements or atoms which reform into syngas at temperature above 1200°C. Carbonaceous material, in some cases, consists of carbonaceous component and non-carbonaceous component. For example, the feed stock material may be coal where the non-carbonaceous component is slag, comprising various mixtures of SiO₂, Al₂O₃, Fe₂O₃, CuO, and others. Alternatively, the feed stock material may comprise other types of materials such as oil, oil emulsion, oil and sand mixtures, and waste products such as tires, plastics, hospital wastes, and toxic industrial wastes. From hereon, the method of the present invention may be described in terms of coal powder as the feed stock material. However, the present invention is applicable to reformation of other types of carbonaceous materials.

The feed stock inlet 114 sprays coal powder into the reduction reaction chamber 102 using compressed and preheated CO₂ gas. In one embodiment, the CO₂ gas is preheated to a temperature of approximately 900° C prior to spraying powdered coal. In a preferred embodiment, the syngas burner 104 is located just underneath the feed stock inlet 114, such that the feed stock material is quickly exposed to the ultra hot steam or steam and CO₂ generated by the syngas burner 104, so that the temperature of the carbonaceous material is also rapidly brought up to 1200°C.

However, initially before the temperature of the reduction reaction chamber 102 reaches 1200°C, one begins to observe a lot of black smoke (free carbon). Eventually, the syngas burner 104 and the gas turbine 106 provide steam and CO₂ which transport heat energy sufficient to maintain the temperature of the reduction reaction chamber 102 to at least 1200°C. When the temperature reaches 1200°C, suddenly the black smoke disappears and one begins to detect carbon monoxide at the gas outlet 119.

The carbon atoms of coal or the carbonaceous material, such as fossil fuel (-CH2-) undergo the following gasification reaction in the reduction reaction chamber 102:

C+H₂O → CO+H₂

C+CO₂ → 2CO

(-CH₂-)+H₂O → CO+2H₂

(-CH₂-)+CO₂ → 2CO+H₂

The high temperature in the reduction reaction chamber 102 permits these reactions to take place without the use of a catalyst. The syngas generated by these reactions exits the reduction reaction chamber 102 via the syngas outlet 116. The syngas output accelerates and reproduces what is shown in **FIG. 2.** The syngas may be redirected to the gas turbine 106 or the syngas burner 104, as discussed above.

In the present invention, it is also important to ensure that the temperature of the reduction reaction chamber 102 does not rise above the fluid temperature of the non-carbonaceous material included in the feed stock material. For coal, the fluid temperature of the slag is between about 1300°C and 1400°C. Therefore, if the reaction temperature is maintained uniformly above 1200°C and below about 1300°C, the solid slag accumulates at the bottom of the reduction reaction chamber 102 in the non-fluid slag collector 118, rather than sticking to the internal surface of the reduction reaction chamber 102. The fluid temperature will be material specific, and therefore the upper temperature limit for the reaction will need to be adjusted based on the type of the non-carbonaceous component present in the feed stock material. Generally, however, the temperature of the coal gasification reactor 100 should be at least 1200°C and less than 1300°C.

The present invention provides an integrated, efficient gasifier for an IGCC, where the exhaust gas of the syngas turbine engine drives the reduction reaction of coal gasification. A smooth and uniform temperature control within the gasifier provides high efficiency of carbon reforming and quality of product syngas. The gasifier of the present invention may be only 1/10 the size of a conventional gasifier, and the cost of building and operating the gasifier of the present invention would also be substantially lower. The gasifier of the present invention, for example, may have an inner diameter of about 500 mm and a height of about 2000 mm. The present invention also approaches carbon conversion efficiency of nearly 100% at 1200°C.

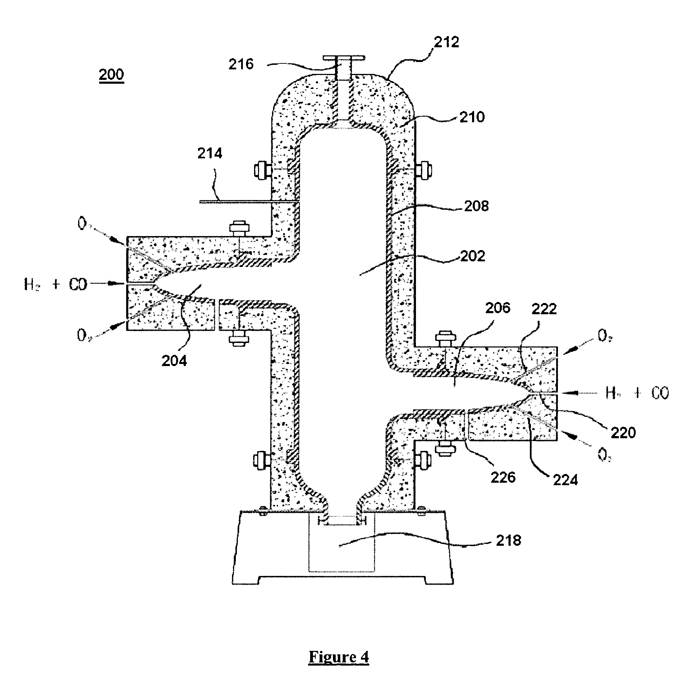

**FIG. 4** illustrates another embodiment of a gasification reactor of the present invention. The gasification reactor 200 is similar to the gasification reactor 100 shown in **FIG. 3**, except that the gas turbine 106 of the gasification reactor 100 is replaced with another oxidation reaction chamber 206, such as a syngas burner. This oxidation reaction chamber 206 reacts oxygen with hydrogen gas or syngas to generate hot steam or steam and carbon dioxide at a temperature ranging from 1800°C to 2000°C. This steam or steam and carbon dioxide generated by the syngas burner 206 provide the primary source of heat for the reduction reaction and the steam or steam and carbon dioxide generated by the syngas burner 204 provide the secondary source of heat for the reduction reaction. The syngas generated by the gasification reactor 200 may be recycled and provided to both syngas burners 204, 206. The other features of the gasification reactor 200 are similar to those of the gasification reactor 100.

While in accordance with the patent statutes, description of the various embodiments and examples have been provided, the scope of the invention is not to be limited thereto or thereby. Modifications and alterations of the present invention will be apparent to those skilled in the art without departing from the scope and spirit of the present invention.

Therefore, it will be appreciated that the scope of this invention is to be defined by the appended claims, rather than by the specific examples which have been presented by way of example.

## Claims

1. An integrated gasification combined cycle system comprising:
(i) a gasification reactor; and
(ii) a gas turbine coupled to the gasification reactor,
wherein the gasification reactor comprises a reduction reaction chamber, a feed stock inlet for introducing a feed stock into the reduction reaction chamber, a gas inlet for introducing an exhaust gas generated by the gas turbine into the reduction reaction chamber, and a gas outlet for releasing syngas generated by a reaction of the feed stock and the exhaust gas in the reduction reaction chamber.

2. The system of claim 1 wherein the exhaust gas comprises steam or steam and carbon dioxide.

3. The system of claim 2 wherein the exhaust gas provides heat energy sufficient to maintain a temperature of at least 1200°C in the reduction reaction chamber.

4. The system of claim 1 wherein the gasification reactor further comprises an oxidation reaction chamber which converts hydrogen gas to steam or syngas to steam and carbon dioxide to provide heat energy sufficient to maintain a temperature of at least 1200°C in the reduction reaction chamber.

5. The system of claim 4 wherein the oxidation reaction chamber comprises a syngas burner, and the steam or steam and carbon dioxide from the gas turbine provide a primary source of heat energy sufficient to maintain a temperature of at least 1200°C in the reduction reaction chamber and the steam or steam and carbon dioxide from the syngas burner provide a secondary source of heat energy sufficient to maintain a temperature of at least 1200°C in the reduction reaction chamber.

6. The system of claim 5 wherein the syngas burner is positioned substantially orthogonally to the reduction reaction chamber.

7. The system of claim 5 wherein the syngas burner is positioned sufficiently proximal to the feed stock inlet to quickly expose the feed stock with the steam or steam and carbon dioxide to quickly achieve a temperature of at least 1200°C in the reduction reaction chamber.

8. The system of claim 1 wherein the feed stock inlet comprises a coal powder inlet.

9. The system of claim 7 wherein the reduction reaction chamber further comprises a non-fluid slag collector disposed at a lower end of the reduction reaction chamber.

10. The system of claim 1 wherein the gas turbine comprises an exhaust gas outlet for releasing the exhaust gas and the exhaust gas outlet is coupled to a lower section of the reduction reaction chamber.

11. The system of claim 10 wherein the feed stock inlet and the oxidation reaction chamber are disposed near an upper section of the reduction reaction chamber.

12. A method of gasification comprising the steps of:
(i) providing a gasification reactor and a gas turbine coupled to the gasification reactor;
(ii) introducing a feed stock comprising a carbonaceous material into a reduction reaction chamber of the gasification reactor;
(iii) introducing oxygen and hydrogen gas or syngas into the gas turbine; and
(iv) allowing steam or steam and carbon dioxide generated by the gas turbine to enter the reduction reaction chamber to react with the carbonaceous material to produce syngas.

13. The method of claim 12 wherein the steam or steam and carbon dioxide generated by the gas turbine enter the reduction reaction chamber at a temperature between about 1500°C and about 1700°C.

14. The method of claim 12 wherein the steam or steam and carbon dioxide generated by the gas turbine enter the reduction reaction chamber and provide heat energy sufficient to maintain a temperature of at least 1200°C in the reduction reaction chamber and react with the carbonaceous material to produce syngas.

15. The method of claim 12 wherein the gasification reactor comprises an oxidation reaction chamber and further comprising:
(v) reacting oxygen and hydrogen gas in the oxidation reaction chamber thereby producing steam; and
(vi) allowing the steam generated by the oxidation reaction chamber to enter the reduction reaction chamber to provide heat energy sufficient to maintain a temperature of at least 1200°C in the reduction reaction chamber and react with the carbonaceous material to produce syngas.

16. The method of claim 15 wherein the oxidation reaction chamber comprises a syngas burner, step (v) comprises reacting oxygen and syngas in the oxidation reaction chamber thereby producing steam and carbon dioxide, and step (vi) comprises allowing the steam and carbon dioxide generated by the oxidation reaction chamber to enter the reduction reaction chamber to provide heat energy sufficient to maintain a temperature of at least 1200°C in the reduction reaction chamber and react with the carbonaceous material to produce syngas.

17. The method of claim 15 wherein oxygen is substantially fully consumed in step (v).

18. The method of claim 12 wherein oxygen is substantially fully consumed in step (iii).

19. The method of claim 16 wherein the syngas burner is positioned sufficiently proximal to a feed stock inlet of the gasification reactor and further comprising quickly exposing the feed stock introduced through the feed stock inlet with the steam or steam and carbon dioxide generated by the syngas burner to enable the feed stock to quickly achieve a temperature of at least 1200°C in the reduction reaction chamber.

20. The method of claim 12 wherein the feed stock further comprises a non-carbonaceous component and further comprises maintaining the temperature of the reduction reaction chamber between about 1200°C and a non-fluid point of the non-carbonaceous component.

21. The method of claim 12 wherein the feed stock comprises coal where the non-carbonaceous component is slag and the non-fluid point of the slag is between about 1300°C and 1400°C.

22. The method of claim 12 wherein the feed stock comprise coal powder and step (ii) comprises spraying the coal powder into the reduction reaction chamber.

23. The method of claim 22 wherein the coal powder is spayed into the reduction reaction chamber using compressed carbon dioxide at a temperature of about 900°C.

24. The method of claim 21 further comprising collecting the slag through a non-fluid slag collector provided near a lower section of the reduction reaction chamber.

25. The method of claim 12 wherein at least a portion of the syngas produced by the reduction reaction chamber is recycled into the gas turbine.

26. The method of claim 16 wherein at least a portion of the syngas produced by the reduction reaction chamber is recycled into the syngas burner.

27. A method of gasifying a carbonaceous material, said carbonaceous material comprising a carbonaceous component and a solid non-carbonaceous component, said method comprising the steps of:
(i) introducing said carbonaceous material into a reduction reaction chamber of a gasification reactor, wherein said reduction reaction chamber is maintained from about 1200°C to a temperature below the fluid point of said solid non-carbonaceous component;
(ii) reacting oxygen gas and hydrogen gas or syngas in an oxidation reaction chamber of said gasification reactor thereby producing steam or steam and carbon dioxide; and
(iii) allowing said steam or steam and carbon dioxide to enter said reduction reaction chamber and provide heat energy sufficient to maintain the temperature of said reduction reaction chamber of at least 1200°C and react with said carbonaceous component to produce syngas.

28. A gasification reactor comprising:
(i) a reduction reaction chamber having an upper section and a lower section;
(ii) a feed stock inlet provided near the upper section for introducing a feed stock into the reduction reaction chamber;
(iii) a first oxidation reaction chamber and a second oxidation chamber, each for converting hydrogen gas to steam or syngas to steam and carbon dioxide and providing steam or steam and carbon dioxide to the reduction reaction chamber; and
(iv) a gas outlet for releasing syngas generated by a reaction of the feed stock and the steam or steam and carbon dioxide in the reduction reaction chamber.

29. A gasification reactor comprising:
(i) a reduction reaction chamber;
(ii) a feed stock inlet for introducing a feed stock into the reduction reaction chamber;
(iii) an oxidation reaction chamber for converting hydrogen gas to steam or syngas to steam and carbon dioxide and providing steam or steam and carbon dioxide to the reduction reaction chamber; and
(iv) a gas outlet for releasing syngas generated by a reaction of the feed stock and the steam or steam and carbon dioxide in the reduction reaction chamber,
wherein the oxidation reaction chamber is positioned sufficiently proximal to the feed stock inlet to quickly expose the feed stock with steam or steam and carbon dioxide converted within the oxidation reaction chamber to quickly achieve a temperature of at least 1200°C in the reduction reaction chamber.
